Europäisches Patentamt

European Patent Office

Office européen des brevets

(11) Veröffentlichungsnummer : **0 065 253**
**B1**

# (12) EUROPÄISCHE PATENTSCHRIFT

(45) Veröffentlichungstag der Patentschrift :
21.11.85

(21) Anmeldenummer : 82104045.8

(22) Anmeldetag : 07.05.82

(51) Int. Cl.⁴ : **C 08 F220/12, C 08 F 2/26 //**
**(C08F220/12, 220:04, 222:00)**

(54) Verfahren zur Herstellung von konzentrierten Polyacrylat-Dispersionen.

(30) Priorität : 20.05.81 DE 3119967

(43) Veröffentlichungstag der Anmeldung :
24.11.82 Patentblatt 82/47

(45) Bekanntmachung des Hinweises auf die Patenterteilung : 21.11.85 Patentblatt 85/47

(84) Benannte Vertragsstaaten :
AT BE CH DE FR GB IT LI NL SE

(56) Entgegenhaltungen :
US-A- 2 655 496
US-A- 3 202 638
US-A- 4 148 746
Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Penzel, Erich, Dr.
Carl-Bosch-Strasse 86
D-6700 Ludwigshafen (DE)
Erfinder : Eckert, Guenter, Dr.
Flossbachstrasse 1
D-6703 Limburgerhof (DE)
Erfinder : Heider, Lothar, Dr.
Wolframstrasse 13
D-6700 Ludwigshafen (DE)
Erfinder : Wuertele, Lothar, Dr.
Buchenstrasse 18
D-6700 Ludwigshafen (DE)
Erfinder : Schackert, Werner
Richard-Strauss-Strasse 24
D-6707 Schifferstadt (DE)

## Beschreibung

Konzentrierte wäßrige Polyacrylat-Dispersionen mit Feststoffgehalten von über 55 Gew.% können nach einer Reihe bekannter Verfahren hergestellt werden. Bei dem Verfahren der US-PS 3 644 258 werden dabei zunächst wäßrige Dispersionen mit einem Feststoffgehalt von 25 bis 30 % durch Emulsionspolymerisation der Monomeren hergestellt, die dann anschließend durch Abdestillieren von Wasser bis zu Feststoffgehalten von etwa 60 % unter Agglomeration der Polymerisatteilchen aufkonzentriert werden. Das Verfahren ist verhältnismäßig umständlich und erlaubt nicht, polare Monomere, wie besonders Acrylsäure, Methacrylsäure und deren Amide, in nennenswerter Menge einzupolymerisieren, da sonst beim Aufkonzentrieren verhältnismäßig starke Stippenbildung eintritt. Bei dem Verfahren der DE-AS 1 910 488, bei bem unter Einhalten einer bestimmten Emulgatorkonzentration bei Polymerisationsbeginn gearbeitet wird, werden polare Monomere, wie Methacrylamid und Methacrylsäure nur in Mengen von 1 bis 1,3 Gew.%, bezogen auf die gesamten Monomere mitverwendet und etwa 60 %ige Dispersionen erhalten (vgl. Beispiele 2 und 6). Größere Anteile an derartigen polaren Monomeren können bei diesem Verfahren nicht mitverwendet werden, ohne daß es zu starker Stippenbildung kommt. Starke Stippenbildung wird auch, beim Nacharbeiten von Beispiel 1 der GB-PS 1 261 672 beobachtet, bei dem in einer mehrstufigen Redoxopolymerisation schließlich eine 60 %ige Polyacrylatdispersion aus einem Monomerengemisch erhalten wird, daß 5 Gew.%, bezogen auf die gesamten Monomeren Acrylsäure enthält. Bei dem gleichfalls sehr aufwendigen Verfahren der US-PS 3 637 563, bei bem ein Emulsionszulaufverfahren mit einer Wasser-in-Öl-Voremulsion angewandt wird, werden keine wasserlöslichen Hilfsmonomeren, wie Acrylsäure und Acrylamid, in den Beispielen mitverwendet in denen 60 bis 75 %ige Latices erhalten werden. Polare Monomere von der Art der $\alpha,\beta$-monoolefinisch ungesättigten Mono- oder Dicarbonsäuren und deren Amide werden zwar als Comonomeren neben vielen anderen Comonomeren aufgeführt, doch werden keine Angaben über ihre Mengen gemacht und man erhält auch in diesem Fall stark stippenhaltige Produkte, wenn man sie in Anteilen über etwa 2.% mitverwendet. Schließlich ist in der US-PS 4 130 523 ein Verfahren zur Herstellung von hochkonzentrierten Polyacrylat-Latices beschrieben, bei dem zunächst in wäßriger Emulsion ein Keimlatex hergestellt wird, der zum Teil aus dem Reaktionsgefäß abgezogen und zu einem späteren Zeitpunkt während der Polymerisation diesem wieder kontinuierlich zugeführt wird. Bei den Beispielen wird als Comonomeres Acrylsäure, jedoch nur in einer Menge von 1 Gew.%, bezogen auf die Monomeren, mitverwendet. Auch bei diesem Verfahren des Standes der Technik können verhältnismäßig hohe Anteile an Acrylsäure oder Methacrylsäure nicht mitverwendet werden.

Für eine Reihe von Anwendungsgebieten sind aber hochkonzentrierte Polyacrylat-Latices, mit Feststoffgehalten von mindestens 55 Gew.% erwünscht, die verhältnismäßig niedere Viskositäten aufweisen und Polyacrylate enthalten, die verhältnismäßig hohe Anteile an polaren Monomeren, wie besonders $\alpha,\beta$-monoolefinisch ungesättigte Mono- und/oder Dicarbonsäuren und/oder deren Amide, einpolymerisiert enthalten und zudem praktisch keine Stippen aufweisen.

Es wurde nun gefunden, daß man konzentrierte Polyacrylat-Dispersionen durch Polymerisation von 65 bis 97 Gew.% (Meth)acrylsäure-estern 1 bis 8 C-Atome enthaltender Alkanole, 0,3 bis 10 Gew.% 3 bis 5 C-Atome enthaltender $\alpha,\beta$-monoolefinisch ungesättigter Mono- und/oder Dicarbonsäuren und/oder deren Amide und 0 bis 25 Gew.% Monomere aus der Gruppe Styrol, Acrylnitril, Vinylacetat und Vinylchlorid in wäßriger Emulsion bei pH 2 bis 6 in Gegenwart von 0,01 bis 5,0 Gew.%, bezogen auf die Monomeren von Schwefelsäurehalbestern von mit 5 bis 50 Mol Ethylenoxid kondensierten 8 bis 9 C-Atome im Alkylrest enthaltenden Alkylphenolen und von üblichen wasserlöslichen radikalbildenden Initiatoren bei 30 bis 95 °C nach dem Emulsionszulaufverfahren herstellen kann, wenn man zusätzlich als Emulgator 0,01 bis 1 Gew.%, bezogen auf die Monomeren eines Sulfonbernsteinsäuredialkylesters mit 8 bis 18 C-Atome in den Alkylresten verwendet. Nach dem Verfahren können in einfacher Weise praktisch stippenfreie Polyacrylat-Dispersionen erhalten werden, deren Polymerisat-Gehalt über 55 % liegt und die trotz hohen Carboxylgruppengehalts niederviskos sind. Die nach den neuen Verfahren hergestellten konzentrierten Polyacrylat-Latices ergeben überraschenderweise auf Lederuntergründen glatte geschlossene Filme, d. h. einen « guten Abschluß ». Die Herstellung von Polyacrylat-Dispersionen aus überwiegenden Mengen Acryl- und Methacrylestern 1 bis 8 C-Atome enthaltende Alkanole, die im allgemeinen 0,5 bis 5 Gew.% $\alpha,\beta$-monoolefinisch ungesättigte Mono und/oder Dicarbonsäuren und/oder deren Amide einpolymerisiert enthalten und die auch Comonomere, wie Styrol, Acrylnitril und Vinylacetat enthalten können, nach dem Emulsionszulaufverfahren bei pH-Werten unter 6 und Verwendung von Schwefelsäurehalbestern von Ethylenoxidanlagerungsprodukten an Alkylphenole mit 8 bis 9 C-Atomen im Alkylrest bei 30 bis 95 °C in Gegenwart von radikalbildenden Initiatoren ist an sich bekannt, doch werden dabei im allgemeinen nur Polyacrylat-Dispersionen erhalten, die 45 bis etwas über 50 Gew.% der Copolymerisate enthalten. Es hat sich in der Praxis als nicht möglich erwiesen, hierbei einen Gehalt von beispielsweise 5 bis 6 Gew.% Acrylsäure dann einzupolymerisieren, wenn Polymerisat-Konzentrationen über 55 Gew.%, z. B. von 60 bis 65 Gew.% angestrebt

werden. In diesem Fall tritt sehr leicht Koagulation des Ansatzes ein oder aber es werden sehr stark stippenhaltige zum Teil hochviskose Produkte erhalten. Andererseits ist es auch allgemein bekannt, Sulfobernsteinsäuredialkylester mit 8 bis 18 C-Atomen in den Alkylresten als Emulgator für Emulsionspolymerisationen zu verwenden. Es war jedoch nicht zu erwarten, daß bei gleichzeitiger Verwendung der Sulfobernsteinsäuredialkylester mit den Schwefelsäurehalbestern der Ethylenoxidaddukte von Alkylphenolen hochkonzentrierte Polyacrylatdispersionen erhalten werden können, die 0,3 bis 10 Gew.% monoolefinisch ungesättigte Mono- oder/und Dicarbonsäuren und/oder deren Amide einpolymerisiert enthalten, und daß die so erhältlichen Dispersionen praktisch frei von Stippen und niederviskos sind und trotz ihrer hohen Konzentration auf Lederoberflächen einen « guten Abschluß » ergeben.

Als Hauptmonomere sind für das neue Verfahren Acrylsäure- und Methacrylsäureester des Methanols, Ethanols, Isobutanols, n-Butanols und 2-Ethylhexanols von besonderem Interesse ; vor allem Methylacrylat, Methylmethacrylat, Ethylacrylat, Isobutylacrylat, n-Butylacrylat und 2-Ethylhexylacrylat und -methacrylat werden vorgezogen. Als monoolefinisch ungesättigte Carbonsäuren sind Acrylsäure und Methacrylsäure, als Amide, Acrylamid und Methacrylamid sowie die N-Alkylolamide mit 1 bis 4 C-Atomen in den Alkylgruppen, wie N-Methylolacrylamid und -methacrylamid, von besonderem Interesse ; geeignet sind ferner Maleinsäure, Fumarsäure und Itakonsäure sowie Maleinsäureimid, Maleinsäuremonoamid und Maleinsäurediamid. Der Gehalt dieser polaren Monomeren liegt vorzugsweise bei 0,5 bis 7,5 Gew.%, bezogen auf die gesamten Monomeren. Styrol, Acrylnitril, Vinylacetat und/oder Vinylchlorid sind für die Modifizierung der Eigenschaften der Copolymerisate in vielen Fällen von Interesse, doch ist ein Gehalt an diesen Monomeren nicht in allen Fällen erforderlich.

Die Schwefelsäurehalbester leiten sich bevorzugt von solchen Ethylenoxidaddukten ab, die 20 bis 30 Mol Ethylenoxid je Mol Alkylphenol ankondensiert enthalten. Ihre Menge beträgt vorzugsweise 0,1 bis 0,5 Gew.%, bezogen auf die Monomeren. Sie werden vorzugsweise, wie auch die Sulfobernsteinsäuredialkylester in Form ihrer Natriumsalze eingesetzt. Die Sulfobernsteinsäuredialkylester weisen vorzugsweise verzweigte Alkylreste auf, wobei der 2-Ethylhexylrest von besonderm Interesse ist. Ihre Menge beträgt vorzugsweise 0,1 bis 0,5 Gew.%, bezogen auf die Monomeren. Geeignete Sulfobernsteinsäurealkylester sind ferner der Didodecylester und der Distearylester.

Bei dem neuen Verfahren können die üblichen radikalbildenden Polymerisations-Initiatoren, wie vor allem Alkalipersulfate, besonders Ammoniumpersulfat, Kaliumpersulfat und Natriumpersulfat, Wasserstoffperoxid, Peroxidicarbonate und -borate in den üblichen Mengen, das ist von 0,1 bis 1,5, insbesondere von 0,3 bis 0,7 Gew.%, bezogen auf die Monomeren, eingesetzt werden.

Das Verfahren der Emulsions-Zulaufpolymerisation ist dem Fachmann in allgemeiner Weise geläufig. Dabei werden die Monomeren in emulgierter Form dem Polymerisationsgefäß im wesentlichen nach Maßgabe ihres Verbrauchs zugeführt. Im allgemeinen wird mit einem geringen Anteil, der in der wäßrigen Phase im Polymerisationsgefäß vorgelegt wird, die Polymerisation unter Erwärmen der Vorlage gestartet. In der Vorlage werden meist 10 bis 50, vorzugsweise 25 bis 50 % der gesamten Wassermenge vorgelegt. Gleichzeitig mit dem Monomeren-Emulsions-Zulauf wird aus einem getrennten Gefäß eine wäßrige Lösung des Initiators zugeführt. Im vorliegenden Fall polymerisiert man vorzugsweise im Bereich von 50 bis 85 °C. Polymerisationstemperaturen unter 50 °C, im allgemeinen zwischen 30 und 50 °C sind beim Einsatz der üblichen Redoxkatalysatoren von Interesse.

Der pH-Wert während der Polymerisation beträgt vorzugsweise 3 bis 5.

Die nach dem neuen verfahren hergestellten Polyacrylatdispersionen sind sehr gut lagerbeständig und weisen besonders kurze Trockenzeiten der daraus gebildeten Filme auf. Sie können auch in verdünnter Form eingesetzt werden. Beim Auftrag mit Walzen zeigen die nach dem neuen Verfahren erhaltenen Dispersionen verbesserte Stabilität, so daß sich praktisch keine Walzenbeläge bilden. Aus den Dispersionen hergestellte Filme sind glasklar und rißfrei. Wegen des auf Leder erzielbaren guten Abschlusses kommt man im allgemeinen bei der Zurichtung von Leder mit geringeren Auftragsmengen aus.

Die in den folgenden beispielen angegebenen Teile und Prozente beziehen sich auf das Gewicht. Die mittlere Teilchengröße wird als LD-Wert bestimmt ; das ist die Lichtdurchlässigkeit in % einer auf 0,01 Gew.% verdünnten Probe bei einer Schichtdicke von 2,5 cm und der Wellenläge des eingestrahlten Lichtes von 0,546 μm.

Beispiel 1

1,8 Teile Kaliumperoxiddisulfat werden in 150 Teile Wasser gelöst und in ein Reaktionsgefäß gegeben, das mit einem Rührer, Thermometer, Rückflußkühler und zwei Zulaufgefäßen ausgerüstet ist. Zulauf I besteht aus einer Emulsion von

444 Teilen iso-Butylacrylat,
120 Teilen Styrol,
18 Teilen Acrylsäure und
18 Teilen Methacrylamid

in 159 Teilen Wasser, emulgiert mit einer Mischung aus 3 Teilen einer 40 %igen wäßrigen Lösung eines $C_{14}$-$C_{15}$-Paraffinsulfonates und 3 Teile einer 20 %igen wäßrigen Lösung eines mit 25 Mol Ethylenoxid oxethylierten p-Isooctylphenols, 0,8 Teile einer 75 %igen wäßrigen Lösung des Natriumsalzes der Di-n-octylsulfobernsteinsäure. Zulauf II besteht aus einer Lösung von 1,2 Teilen Kaliumperoxidisulfat in 40 Teilen Wasser.

Das Reaktionsgefäß wird unter Rühren auf 85 °C geheizt. Anschließend bringt man die Zuläufe I und II im Verlauf von 3 Stunden kontinuierlich in das Reaktionsgefäß ein. Das Reaktionsprodukt wird noch weitere 2 Stunden auf 90 °C erwärmt, anschließend wird gekühlt. Man erhält eine Dispersion, deren Feststoffgehalt 62,8 %, deren LD-Wert 14 % und der pH-Wert 4,4 beträgt. Die Dispersion ist viskos aber gut fließfähig und filtrierbar. Sie enthält weder Stippen noch Koagulat.

Vergleichsversuch 1

Man arbeitet wie in Beispiel 1 angegeben, verwendet aber anstelle des Sulfobernsteinsäureesters 3 Teile einer 20 %igen wäßrigen Lösung eines mit 25 Mol Ethylenoxid oxethylierten p-Isooctylphenols. Man erhält dann eine Dispersion des Feststoffgehalts 62,9 %, des LD-Wertes 11 % und des pH-Wertes 4,4. Die Dispersion ist cremeartig viskos, nicht frei fließend und nicht filtrierbar.

Beispiel 2

Es wird verfahren, wie im Beispiel 1 angegeben, nur besteht die Vorlage aus 180 Teilen Wasser in dem 1,05 Teile Ammoniumperoxidisulfat gelöst sind. Der Zulauf I besteht aus einer Emulsion von

    672   Teilen Ethylacrylat,
    21    Teilen Acrylsäure,
    7     Teilen Acrylamid und
    1,5   Teilen 25 %igem Ammoniak

in 160 Teilen Wasser emulgiert mit einer Mischung aus 0,5 Teilen einer 35 %igen wäßrigen Lösung des Natriumsalzes des Schwefelsäurehalbesters von mit 25 Mol Ethylenoxid oxethyliertem p-Isooctylphenol und 1,16 Teilen einer 60 %igen wäßrigen Lösung des Natriumsalzes des Di-2-Ethylhexyl-sulfobernsteinsäureesters. Der Zulauf II enthält 2,1 Teile Ammoniumperoxidisulfat, gelöst in 32 Teilen Wasser.

Die Polymerisation erfolgt nach der im Beispiel 1 angegebenen Weise, nur werden hier in das aufgeheizte Reaktionsgefäß 3 Vol.% vom Zulauf I gegeben, die Mischung wird 15 Minuten gerührt, dann wird weiter verfahren wie im Beispiel 1 angegeben.

Der Feststoffgehalt beträgt 65,2 %, der LD-Wert beträgt 23 %, der pH-Wert 3,3. Die Dispersion ist koagulatfrei.

Vergleichsbeispiel 2

Zum Vergleich wird genau wie im Beispiel 2 verfahren, nur wird jetzt anstelle des Sulfobernsteinsäureesters 3,5 Teile einer 20 %igen wäßrigen Lösung eines mit 25 Mol oxethylierten Isooctylphenol eingesetzt. Die Menge Wasser im Zulauf I beträgt 162,5 Teile. Der Feststoffgehalt beträgt 62,9 %, der LD-Wert beträgt 11 %, der pH-Wert 3,2. Die Dispersion enthält 80 Teile Koagulat.

Beispiel 3

Es wird, wie im Beispiel 1 angegeben, gearbeitet. In das Reaktionsgefäß werden 200 Teile Wasser vorgelegt. Der Zulauf I besteht aus einer Emulsion aus

    420    Teilen Ethylacrylat
    90     Teilen Methylmethacrylat,
    60     Teilen Acrylnitril,
    24     Teilen Methacrylsäure und
    13,3   Teilen einer 45 %igen wäßrigen Lösung
von N-Methylolmethacrylamid

in 98 Teilen Wasser emulgiert mit einer Mischung aus 4,3 Teilen einer 35 %igen wäßrigen Lösung des Natriumsalzes des Schwefelsäurehalbesters von mit 25 Mol Ethylenoxid oxethyliertem p-Isooctylphenol und 5 Teilen einer 60 %igen wäßrigen Lösung des Natriumsalzes des Di-2-Ethylhexylsulfobernsteinsäureesters.

Der Zulauf II enthält 3 Teile Kaliumperoxidisulfat gelöst in 80 Teilen Wasser.

2 Vol.% vom Zulauf I und 10 Vol.% vom Zulauf II werden in das aufgeheizte Reaktionsgefäß gegeben und 20 Minuten gerührt. Anschließend werden die beiden Zuläufe I und II, wie im Beispiel 1, zugefahren. Der Feststoffgehalt der erhaltenen Dispersion beträgt 60,4 %, der LD-Wert 35 % und der pH-Wert 4,5.

Die Dispersion ist gut fließend, filtrierbar und koagulatfrei.

Beispiel 4

Es wird, wie im Beispiel 1 angegeben, gearbeitet. In das Reaktionsgefäß werden 200 Teile Wasser und 0,9 Teile Ammoniumperoxidisulfat vorgelegt. Der Zulauf I besteht aus einer Emulsion von

    525    Teilen 2-Ethyl-hexylacrylat,
    45     Teilen Methylmethacrylat,
    27     Teilen Methacrylsäure,
    6,25   Teilen einer 48 %igen wäßrigen Lösung
von N-Methylolacrylamid und
    2      Teilen 25 %igem Ammoniak

in 145 Teilen Wasser, emulgiert mit einer Mischung von 3,43 Teilen einer 35 %igen wäßrigen Lösung des Natriumsalzes des Schwefelsäurehalbesters von mit 25 Mol Ethylenoxid oxethyliertem p-Isooctylphenol und 3,43 Teilen einer 35 %igen wäßrigen Lösung des Di-Natriumsalzes des Sulfobernsteinsäure-n-octadecylesters.

Der Zulauf II enthält 2,1 Teile Ammoniumperoxidisulfat in 50 Teilen Wasser gelöst.

3 Vol.% vom Zulauf I werden in das aufgeheizte Reaktionsgefäß gegeben und 15 Minuten gerührt. Anschließend werden die beiden Zuläufe I und II, wie im Beispiel 1, zugefahren.

Der Feststoffgehalt der erhaltenen Dispersion beträgt 59,8 %, der LD-Wert 30 % und der pH-Wert 3,5. Die Dispersion ist gut fließend, filtrierbar und koagulatfrei.

Beispiel 5

Es wird, wie im Beispiel 1 angegeben, gearbeitet. In das Reaktionsgefäß werden 120 Teile Wasser vorgelegt.

Der Zulauf I besteht aus einer Emulsion von

366 Teilen iso-Butylacrylat,
114 Teilen tert. Butylacrylat,
96 Teilen Styrol,
12 Teilen Acrylsäure,
12 Teilen Methacrylsäure und
4 Teilen 25 %igem Ammoniak

in 175 Teilen Wasser, emulgiert mit einer Mischung von 3,43 Teilen einer 35 %igen wäßrigen Lösung des Natriumsalzes des Schwefelsäurehalbesters von mit 25 Mol Ethylenoxid oxyethyliertem p-Isooctylphenol und 2 Teilen einer 60 %igen wäßrigen Lösung des Natriumsalzes von Di-2-Ethylhexylsulfobernsteinsäureester.

Der Zulauf II enthält 3 Teile Kaliumperoxidisulfat in 120 Teilen Wasser gelöst.

In das aufgeheizte Reaktionsgefäß werden 5 % vom Zulauf I und 5 % vom Zulauf II gegeben, die Mischung wird 20 Minuten gerührt, anschließend werden die Zuläufe I und II, wie im Beispiel 1, zugefahren.

Der Feststoffgehalt der erhaltenen Dispersion beträgt 58,5 %, der LD-Wert 28 % und der pH-Wert 4,8. Die Dispersion ist fließfähig und frei von Stippen und Koagulat und daher gut filtrierbar.

Beispiel 6

Es wird, wie im Beispiel 1 angegeben, gearbeitet. In das Reaktionsgefäß werden 84,5 Teile Wasser vorgelegt zusammen mit 0,2 Teilen einer 35 %igen wäßrigen Lösung des Natriumsalzes des Schwefelsäurehalbesters von mit 25 Mol Ethylenoxid oxethyliertem p-Isooctylphenol und 0,34 Teilen Kaliumperoxidisulfat. Der Zulauf I besteht aus einer Emulsion von

461,8 Teilen n-Butylacrylat,
57,5 Teilen Acrylnitril,
25 Teilen Acrylsäure und
12 Teilen Methacrylamid

in 210 Teilen Wasser, emulgiert mit einer Mischung von 40 Teilen einer 35 %igen wäßrigen Lösung des Natriumsalzes des Schwefelsäurehalbesters von mit 25 Mol Ethylenoxid oxethyliertem p-Isooctylphenol und 7,3 Teilen einer 60 %igen wäßrigen Lösung des Natriumsalzes von Di-2-ethylhexylsulfobernsteinsäureester.

Der Zulauf II enthält 1 Teil Kaliumperoxidisulfat und 1,8 Teile Natriumperoxidisulfat in 76 Teilen Wasser gelöst.

In das aufgeheizte Reaktionsgefäß werden die Zuläufe I und II kontinuierlich im Verlauf von 4 Stunden zugefahren. Anschließend wird, wie im Beispiel 1 verfahren.

Der Feststoffgehalt der erhaltenen Dispersion beträgt 60,7 %, der LD-Wert 33 % und der pH-Wert 3,9. Die Disperson ist gut fließfähig und frei von Stippen und Koagulat und daher gut filtrierbar.

Beispiel 7

Es wird, wie im Beispiel 1 angegeben, gearbeitet. In das Reaktionsgefäß werden 83 Teile Wasser, 0,65 Teile Natriumpyrophosphat und 0,3 Teile Natriumperoxidisulfat vorgelegt.

Der Zulauf I besteht aus einer Emulsion von

525 Teilen Ethyl-hexylacrylat,
78,2 Teilen Vinylacetat,
26 Teilen Ethylacrylat,
13 Teilen Styrol und
3,8 Teilen Acrylsäure

in 160 Teilen Wasser, emulgiert mit einer Mischung von 22,3 Teilen einer 35 %igen wäßrigen Lösung des Natriumsalzes des Schwefelsäurehalbesters von mit 25 Mol Ethylenoxid oxäthyliertem p-Isooctylphenol, 5,2 Teilen einer 25 %igen wäßrigen Lösung von Natriumvinylsulfonat und 1 Teil (fest) des Natriumsalzes von Di-2-ethylhexylsulfobernsteinsäureester.

Der Zulauf II enthält 5 Teile Natriumperoxidisulfat in 70 Teilen Wasser. Die Vorlage wird auf 88 °C aufgeheizt. Bei dieser Temperatur werden die Zuläufe I und II im Verlauf von 4 Stunden kontinuierlich zugegeben. Anschließend wird, wie in Beispiel 1 angegeben, verfahren.

Der Feststoffgehalt der Dispersion beträgt 65,8 %, der LD-Wert 30 % und der pH-Wert 3. Die Dispersion ist niedrigviskos und drucklos filtrierbar.

**Patentansprüche**

1. Verfahren zur Herstellung von konzentrierten Polyacrylat-Dispersionen durch Polymerisation von

65 bis 97 Gewichtsprozent (Meth)Acrylsäureestern 1 bis 8 C-Atomen enthaltender Alkanole,

0,3 bis 10 Gewichtsprozent 3 bis 5 C-Atome enthaltende $\alpha$, $\beta$-monoolefinisch ungesättigter Mono- und/oder Dicarbonsäuren und/oder deren Amide und

0 bis 25 Gewichtsprozent Monomeren aus der Gruppe Styrol, Acrylnitril, Vinylacetat und Vinylchlorid

in wäßriger Emulsion bei pH 2 bis 6 in Gegenwart von 0,01 bis 5,0 Gewichtsprozent, bezogen auf die Monomeren, des Schwefelsäurehalbesters eines mit 5 bis 50 Mol Äthylenoxid kondensierten, 8 bis 9 C-Atome im Alkylrest enthaltenden Alkylphenols und von üblichen wasserlöslichen radikalbildenden Initiatoren bei 30 bis 95 °C nach dem Emulsionszulaufverfahren, dadurch gekennzeichnet, daß man als Emulgator zusätzlich 0,01 bis 1 Gewichtsprozent, bezogen auf die Monomeren, eines Sulfobernsteinsäuredialkylesters mit 8 bis 18 C-Atomen in den Alkylresten verwendet.

2. Verfahren zur Herstellung von konzentrierten Polyacrylat-Dispersionen nach Anspruch 1, dadurch gekennzeichnet, daß man

65 bis 97 Gewichtsprozent (Meth)Acrylsäureester 1 bis 8 C-Atome enthaltender Alkanole,

0,5 bis 7,5 Gewichtsprozent 3 bis 5 C-Atome enthaltende $\alpha$, $\beta$-monoolefinisch ungesättigter Mono- und/oder Dicarbonsäuren und/oder deren Amide und

0 bis 25 Gewichtsprozent Monomere aus der Gruppe Styrol, Acrylnitril, Vinylacetat und Vinylchlorid

in wäßriger Emulsion bei pH 3 bis 5 in Gegenwart von 0,1 bis 0,5 Gewichtsprozent, bezogen auf die Monomeren, des Schwefelsäurehalbesters eines mit 20 bis 30 Mol Äthylenoxid kondensierten, 8 bis 9 C-Atome im Alkylrest enthaltenden Alkylphenols und von 0,1 bis 0,5 Gewichtsprozent, bezogen auf die Monomeren, Sulfobernsteinsäure-di-2-ethylhexylester sowie von üblichen wasserlöslichen radikalbildenden Initiatoren bei 50 bis 85 °C nach dem Emulsionszulaufverfahren polymerisiert.

## Claims

1. A process for the preparation of a concentrated polyacrylate dispersion by polymerization of

65-97 per cent by weight of acrylic or methacrylic acid esters of alkanols of 1 to 8 carbon atoms,

0.3-10 per cent by weight of $\alpha$, $\beta$-monoolefinically unsaturated monocarboxylic and/or dicarboxylic acids of 3 to 5 carbon atoms and/or their amides, and

0-25 per cent by weight of monomers from the group comprising styrene, acrylonitrile, vinyl acetate and vinyl chloride,
in aqueous emulsion at pH 2-6 in the presence of 0.01-5.0 per cent by weight, based on the monomers, of the sulfuric acid half-ester of an adduct of an alkylphenol, alkyl being of 8 or 9 carbon atoms, with 5-50 moles of ethylene oxide and of conventional water-soluble free radical initiators at 30-95 °C, by the emulsion feed process, wherein 0.01-1 per cent by weight, based on the monomers, of a dialkyl sulfosuccinate, alkyl being of 8 to 18 carbon atoms, is used as an additional emulsifier.

2. A process for the preparation of a concentrated polyacrylate dispersion as claimed in claim 1, wherein

65-97 per cent by weight of acrylic or methacrylic acid esters of alkanols of 1 to 8 carbon atoms,

0.5 bis 7.5 per cent by weight of $\alpha$, $\beta$-monoolefinically unsaturated monocarboxylic and/or dicarboxylic acids of 3 to 5 carbon atoms and/or their amides, and

0-25 per cent by weight of monomers from the group comprising styrene, acrylonitrile, vinyl acetate and vinyl chloride
are polymerized in aqueous emulsion at pH 3-5 in the presence of 0.1-0.5 per cent by weight, based on the monomers, of the sulfuric acid half-ester of an adduct of an alkylphenol, alkyl being of 8 or 9 carbon atoms, with 20-30 moles of ethylene oxide and of 0.1-0.5 per cent by weight, based on the monomers, of di-2-ethylhexyl sulfosuccinate as well as of conventional water-soluble free radical initiators, at 50-85 °C by the emulsion feed process.

## Revendications

1. Procédé de préparation, à une température de 30 à 95 °C et selon le procédé d'amenée en émulsion, de dispersions concentrées de polyacrylate, par polymérisation de

65 à 97 % en poids d'esters d'acide (méth)acrylique et d'alcanols contenant 1 à 8 atome C

0,3 à 10 % en poids d'acides mono- et/ou dicarboxyliques à insaturation oléfinique en $\alpha$, $\beta$ et contenant 3 à 5 atomes C, et/ou leurs amides, et

0 à 25 % en poids de monomères du groupe styrène, acrylonitrile, acétate de vinyle et chlorure de vinyle

en émulsion aqueuse, à un pH de 2 à 6, en présence de 0,01 à 5,0 % en poids, par rapport aux monomères, du hémi-ester d'acide sulfurique et d'alkylphénol contenant, dans le reste alkyle, 8 à 9 atomes C et condensé avec 5 à 50 moles d'éthylènoxyde et d'initiateurs générateurs de radicaux usuels, solubles dans l'eau, caractérisé par le fait qu'on utilise, comme émulsifiant, en plus, 0,01 à 1 % en poids, rapporté aux monomères, d'un ester dialkylique d'acide sulfosuccinique, ayant 8 à 18 atomes C dans les restes alkyle.

2. Procédé de préparations de dispersions concentrées de polyacrylate selon la revendication 1 caractérisé par le fait que l'on polymérise à une température de 50 à 85 °C, selon le procédé d'amenée en émulsion,

65 à 97 % en poids d'esters d'acide méthacrylique et d'alcanols contenant 1 à 8 atomes C

0,5 à 7,5 % en poids d'acides mono- et/ou dicarboxyliques à insaturation oléfinique en $\alpha$, $\beta$ et contenant 3 à 5 atomes C, et/ou leurs amides, et

0 à 25 % en poids de monomères du groupe styrène, acrylonitrile, acétate de vinyle de chlorure de vinyle

en émulsion aqueuse, à un pH de 3 à 5, en présence de 0,1 à 0,5 % en poids, par rapport aux monomères, du hémi-ester d'acide sulfurique et d'alkylphénol contenant, dans le reste alkyle, 8 à 9 atomes C et condensé avec 20 à 30 moles d'éthylènoxyde et de 0,1 à 0,5 % en poids, rapporté aux monomères, de di-2-éthylhexylester d'acide sulfosuccinique ainsi que des initiateurs générateurs de radicaux usuels, solubles dans l'eau.